# EUROPÄISCHE PATENTSCHRIFT

(11) **EP 2 332 626 B1**
(45) Veröffentlichungstag und Bekanntmachung des Hinweises auf die Patenterteilung: **17.07.2013**
(21) Anmeldenummer: 10192224.3
(22) Anmeldetag: 23.11.2010
(51) Int. Cl.: B01D 45/06, B01D 45/08

(54) **Vorrichtung zum Abscheiden von Verunreinigungen aus einem Luftstrom**
Device for separating impurities out of an air flow
Dispositif de séparation d'impuretés à partir d'un flux d'air

(30) Priorität: 27.11.2009 DE 102009055958
(43) Veröffentlichungstag der Anmeldung: 15.06.2011
(73) Patentinhaber: AFC Air Filtration & Containment GmbH, 76316 Malsch (DE); Lang, Heribert, 76437 Rastatt (DE)
(72) Erfinder: Mohari, Stefan A., 76133, Karlsruhe (DE); Sadeghi, Ali Mohammad, 76448, Durmersheim (DE); Lang, Heribert, 76887 Bad Bergzabern (DE)
(74) Vertreter: Reule, Hanspeter

(56) Entgegenhaltungen:
- EP-A1- 0 709 500
- EP-A1- 1 068 890
- DE-A1-102005 043 198
- DE-A1-102006 041 213
- DE-U- 6 805 355
- GB-A- 926 358
- GB-A- 2 122 106
- JP-A- 9 047 617
- SU-A1- 1 766 466
- US-A1- 2007 266 854

## Beschreibung

Die Erfindung betrifft eine Vorrichtung zum Abscheiden von Verunreinigungen aus einem Luftstrom gemäß Oberbegriff des Anspruchs 1.

Vorrichtungen zum Abscheiden von Verunreinigungen aus einem Luftstrom, wie beispielsweise der aus der DE 10 2005 056001 A1 bekannte Zentrifugalabscheider, dienen dazu, mit beispielsweise fein verstäubten Öltröpfchen, Schwebstoffen oder dergleichen verunreinigte Luft vor der Einleitung in ein Filtersystem einer Vorreinigung zu unterziehen. Die zu reinigende Luft wird durch ein Rohrsystem geleitet, wobei beim Übertritt der Luft vom ersten Rohr in das zweite Rohr eine Änderung der Strömungsrichtung stattfindet und die Luft samt den in ihr enthaltenen Verunreinigungen zumindest größtenteils aufgrund ihrer Trägheit auf die Prallplatte trifft. Beim Aufprall der Luft auf die Prallplatte und der anschließenden Umlenkung des Luftstroms in das zweite Rohr hinein bleiben die Verunreinigungen zumindest teilweise an der Prallplatte hängen. Auf diese Weise werden größere Schwebstoffpartikel, Öltröpfchen und dergleichen vor Einleitung in das eigentliche Filtersystem aus dem Luftstrom entfernt. Aus der EP 0 709 500 A1 ist eine Vorrichtung der eingangs genannten Art bekannt, bei der ein mit Faserflocken verunreinigter Luftstrom auf ein in einer Transportleitung in seiner Position verstellbar angeordnetes Prallelement geleitet wird. Aus der GB 2 122 106 A ist eine Vorrichtung bekannt, die der Abscheidung von Wasser aus einem Luftstrom dient. Sie weist ein in einem Gehäuse fest montiertes Drahtgeflecht auf, auf das der Luftstrom geleitet wird.

Es ist Aufgabe der Erfindung, eine Vorrichtung der eingangs genannten Art derart weiterzubilden, dass eine noch effektivere Abscheidung von Verunreinigungen aus dem Luftstrom ermöglicht wird.

Die Aufgabe wird erfindungsgemäß durch eine Vorrichtung mit den Merkmalen des Anspruchs 1 gelöst. Vorteilhafte Weiterbildungen sind Gegenstand der abhängigen Ansprüche.

Durch die erfindungsgemäße Lösung, nach der die Prallplatte in Längsrichtung des ersten Rohrs verschiebbar ist, wird insbesondere die Möglichkeit gegeben, die Prallplatte zwischen einer ersten Endstellung, in der sie im Abstand zur Luftaustrittsöffnung angeordnet ist, und einer zweiten Endstellung, in der sie über der Luftaustrittsöffnung angeordnet ist, zu verschieben. Dadurch kann der freie Durchflussquerschnitt an der Einmündung des zweiten Rohrs in das erste Rohr variiert werden. Eine Verkleinerung des freien Durchflussquerschnitts bewirkt eine Erhöhung der Strömungsgeschwindigkeit an der Luftaustrittsöffnung, so dass auf die Luftmoleküle und dementsprechend auch auf die Verunreinigungen eine höhere Zentrifugalkraft wirkt, so dass insbesondere letztere stärker in Richtung zur Prallplatte gedrängt werden und mit dieser kollidieren. Die Prallplatte ist mit einer luftdurchlässigen Struktur versehen, die sich ein Stück weit in Längsrichtung des ersten Rohrs erstreckt und miteinander kommunizierende Hohlräume aufweist.

Weiter liegt der Erfindung der Gedanke zugrunde, dass bei einer Vergrößerung der Fläche auf der Prallplatte, mit der die Verunreinigungen kollidieren können, die Wahrscheinlichkeit erhöht wird, dass sich die Verunreinigungen abscheiden. Indem sich von der luftundurchlässigen Prallplatte die luftdurchlässige Struktur ein Stück weit entgegen der Strömungsrichtung der Luft in das erste Rohr hineinerstreckt, wird eine Labyrinthstruktur geschaffen, durch die eine Vielzahl von Kollisionen der in der Luft enthaltenen Schwebstoffe, Öltröpfchen und dergleichen mit der Oberfläche der luftdurchlässigen Struktur provoziert wird, so dass sich die Verunreinigungen nicht nur an der Prallplatte, sondern vor allem auch an der luftdurchlässigen Struktur anlagern können und dadurch aus dem Luftstrom abgeschieden werden. Dieser Effekt kann vorteilhaft dadurch verstärkt werden, dass die luftdurchlässige Struktur zu den Hohlräumen hin eine Oberfläche aus einem Material aufweist, das für die abzuscheidenden Verunreinigungen, beispielsweise für Öltröpfchen, eine hohe Affinität aufweist.

Zweckmäßig ist das erste Rohr durch eine Abschlusskappe an einem Ende luftdicht verschlossen, wobei die Abschlusskappe eine Führungseinrichtung für die Prallplatte aufweist. Dabei kann ein Handhebel vorgesehen sein, der mit der Prallplatte verbunden ist und durch die Abschlusskappe durchgeführt ist.

Die luftdurchlässige Struktur weist wenigstens über einen Teil ihrer Länge eine der Innenkontur des ersten Rohrs entsprechende Außenkontur auf. Sie durchspannt dann die gesamte lichte Weite des ersten Rohrs und füllt dieses über einen Teil ihrer Länge hinweg aus. Dadurch wird der im ersten Rohr für die Abscheidung der Verunreinigungen zur Verfügung stehende Raum gut ausgenutzt. Gemäß einer vorteilhaften Weiterbildung spannt die luftdurchlässige Struktur an ihrer dem Luftstrom zugewandten Seite zumindest abschnittsweise eine zur Querschnittsfläche des ersten Rohrs geneigte Stirnfläche auf. Wenn sie zudem um eine sich in der Längsrichtung des ersten Rohrs erstreckende Achse drehbar ist, kann die geneigte Stirnfläche vorteilhaft auf verschiedene Arten angeordnet werden. Indem die luftdurchlässige Struktur die Luftauslassöffnung zumindest teilweise bedeckt, wird der Anteil des Luftstroms verringert, der in das zweite Rohr übergeleitet wird, ohne auf die Prallplatte oder die luftdurchlässige Struktur zu treffen. Insbesondere dann, wenn die luftdurchlässige Struktur die Luftauslassöffnung vollständig bedeckt, wirkt sie wie ein Filter, durch den der gesamte Luftstrom durchgeleitet wird.

Die luftdurchlässige Struktur kann regelmäßig oder unregelmäßig aufgebaut sein und insbesondere ein regelmäßiges Gewebe oder ein unregelmäßiges Gestrick aus Draht oder Fasermaterial aufweisen. Sie kann auch durch ein geschäumtes, schwammartiges oder poröses Material gebildet werden, wie beispielsweise ein gesintertes Material, ein Keramikmaterial und/oder einen porösen Kunststoff. Auch Kombinationen aller genannten Materialien sind denkbar. Die Hohlräume müssen nicht über die gesamte Länge der luftdurchlässigen Struktur gleich groß ausgebildet sein. Sie können sich vielmehr zur Prallplatte hin kontinuierlich vergrößern oder aber auch kontinuierlich verkleinern.

Es wird bevorzugt, dass das zweite Rohr zum ersten Rohr in einem spitzen Winkel angeordnet ist, so dass sich die Strömungsrichtung der Luft im zweiten Rohr gegenüber der Strömungsrichtung im ersten Rohr um mehr als 90° und weniger als 180° ändert. Diese Anordnung bewirkt eine deutliche Änderung der Strömungsrichtung und damit eine Erhöhung der Wahrscheinlichkeit, dass die Verunreinigungen in Richtung zur Prallplatte bzw. zur luftdurchlässigen Struktur gelenkt werden und sich dort abscheiden.

Die erfindungsgemäße Vorrichtung weist vorteilhaft zwei oder mehr der oben beschriebenen Umlenkungsstellen für den Luftstrom auf. So ist insbesondere eine Anordnung mit einem dritten Rohr denkbar, wobei die drei Rohre in Form eines Z angeordnet sind und nahe der Einmündung des zweiten Rohrs in das dritte Rohr eine weitere Prallplatte angeordnet ist, die in ihrer Ausgestaltung der oben beschriebenen Prallplatte entspricht.

Im Folgenden wird die Erfindung anhand eines in der Zeichnung schematisch dargestellten Ausführungsbeispiels näher erläutert. Es zeigen
- Fig. 1: eine Filtervorrichtung in perspektivischer Ansicht;

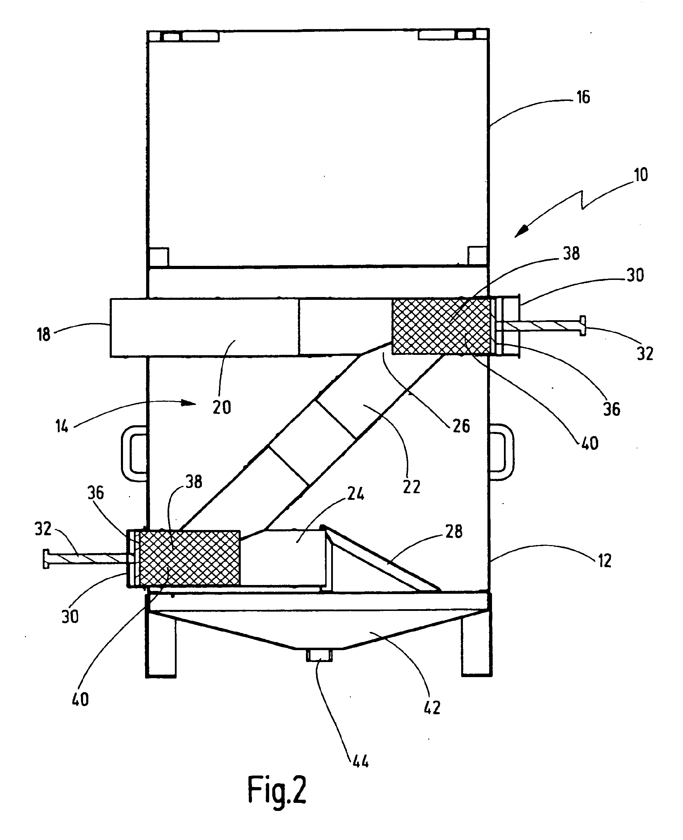

- Fig. 2: eine schematische Darstellung einer Abscheidevorrichtung im Inneren der Filtervorrichtung gemäß Fig. 1;
- Fig. 3a: ein Detail aus Fig. 2 und
- Fig. 3b: eine alternative Ausführungsform des Details gemäß Fig. 3a.

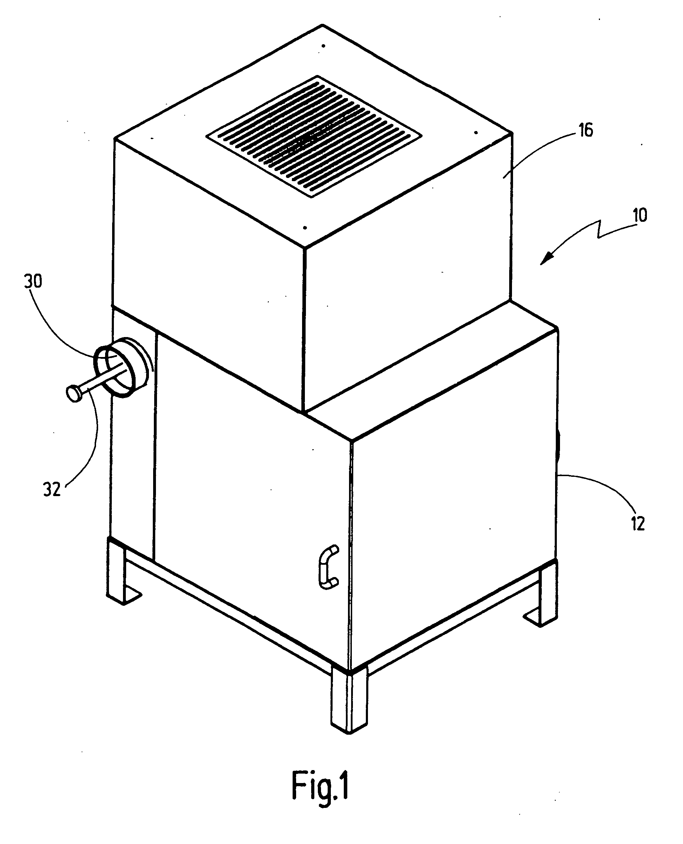

Die in Fig. 1 gezeigte Filtervorrichtung 10 weist ein Gehäuse 12 auf, in dem ein nicht weiter dargestellter Luftfilter sowie eine Abscheidevorrichtung für in der durchgeleiteten Luft vorhandene Verunreinigungen, wie Öltröpfchen oder Staubpartikel, aufgenommen sind. Auf das Gehäuse 12 ist ein Ventilator 16 aufgesetzt, der an einem Luftausgang des Luftfilters einen Unterdruck erzeugt und Raumluft über eine Lufteinlassöffnung 18 der Abscheidevorrichtung 14 einsaugt, über die die Luft in den Luftfilter gelangt. Die Abscheidevorrichtung 14 weist drei Rohre 20, 22, 24 auf, die in der Strömungsrichtung der Luft einander folgen und miteinander kommunizieren sowie Z-förmig angeordnet sind. Dabei ragt das erste Rohr 20 mit seinem ersten Ende aus dem Gehäuse 12 heraus und weist an dieser Stelle die Lufteinlassöffnung 18 auf. Das zweite Rohr 22 mündet nahe dem zweiten Ende des ersten Rohrs 20 in eine Luftauslaßöffnung 26 des ersten Rohrs 20 und verläuft quer zu diesem. Im hier gezeigten Ausführungsbeispiel schließen das erste Rohr 20 und das zweite Rohr 22 einen Winkel von 45° miteinander ein, und zwar in der Weise, dass sich die Strömungsrichtung der Luft vom ersten Rohr 20 zum zweiten Rohr 22 um einen Winkel von 135° ändert. Auf gleiche Weise ist das dritte Rohr 24 in Bezug zum zweiten Rohr 22 angeordnet. Am Ende des dritten Rohrs 24 befindet sich in diesem Ausführungsbeispiel ein Überleitungsstutzen 28 zur Überleitung der Luft in den Luftfilter.

Das Ende des ersten Rohrs 20 ist durch eine Abschlusskappe 30 luftdicht verschlossen. Durch die Abschlusskappe 30 ist ein Handhebel 32 in einer Führungseinrichtung durchgeführt, an dessen Ende eine im ersten Rohr 20 angeordnete, dessen lichte Weite durchspannende Prallplatte 36 befestigt ist. Die Prallplatte 36 ist eine luftundurchlässige Platte, die im hier gezeigten Ausführungsbeispiel aus Blech besteht. Der Handhebel 32 ragt aus dem Gehäuse 12 heraus, so dass er zum Verschieben der Prallplatte 36 im ersten Rohr 20 benutzt werden kann. Auf der dem Handhebel 32 abgewandten Seite der Prallplatte 36 ist eine luftdurchlässige Struktur 38 angeordnet, die sich ein Stück weit entgegen der Strömungsrichtung der Luft in Längsrichtung des ersten Rohrs 20 erstreckt und diese über ihre Länge hinweg auskleidet. Die luftdurchlässige Struktur 38 weist miteinander kommunizierende Hohlräume 40 auf, so dass Luft bis zur Prallplatte 36 vordringen kann. Die luftdurchlässige Struktur 38, die im vorliegenden Ausführungsbeispiel aus einem Drahtgeflecht besteht, weist eine große Oberfläche auf, mit der die in der Luft enthaltenen Verunreinigungen, insbesondere feine Öltröpfchen, kollidieren und sich anlagern können. Zu diesem Zweck weist das Drahtgeflecht eine Oberflächenbeschichtung auf, die eine hohe Affinität gegenüber Öl aufweist.

Mittels des Handhebels 32 kann die Prallplatte 36 im ersten Rohr 20 verschoben werden, und zwar von einer ersten Endstellung, in der sie bis zur Abschlusskappe 30 zurückgezogen ist und sich im Abstand zur Luftauslassöffnung 26 befindet, und einer zweiten Endstellung, in der sie sich über der Luftauslassöffnung 26 befindet. In letzterer Stellung wird die Luftauslassöffnung 26 durch die Prallplatte 36 verengt, so dass bei der Überleitung der Luft vom ersten Rohr 20 in das zweite Rohr 22 die Strömungsgeschwindigkeit erhöht wird. In diesem Fall wirken auf die in der Luft enthaltenen Verunreinigungen höhere Zentrifugalkräfte, die sie zur Prallplatte 36 treiben und ein Ausscheiden aus der Luft erleichtern. Desweiteren kann die luftdurchlässige Struktur 38 durch Verschieben der Prallplatte 36 so angeordnet werden, dass sie die Luftauslassöffnung 26 vollständig bedeckt, so dass sie für den gesamten Luftstrom wie ein Filter zur Ausscheidung von Öltröpfchen oder Schwebstoffen wirkt.

An der Stelle, an der der Luftstrom beim Übertritt vom zweiten Rohr 22 in das dritte Rohr 24 wiederum eine Richtungsänderung um 135° erfährt, ist im gezeigten Ausführungsbeispiel eine weitere Prallplatte angeordnet. Diese entspricht in ihrer Ausgestaltung der Prallplatte 36, so dass zu ihrer Bezeichnung identische Bezugszeichen verwendet werden.

Unterhalb des Überleitungsstutzens 28 ist eine Auffangwanne 42 angeordnet. An den Prallplatten 36 bzw. den luftdurchlässigen Strukturen 38 anhaftende kleine Öltröpfchen vereinigen sich im Lauf der Zeit mit weiteren Öltröpfchen zu größeren Tropfen, die herunterfallen und das zweite Rohr 22 bzw. das dritte Rohr 24 hinunter laufen. Über den Überleitungsstutzen 28 tropfen sie dann in die Auffangwanne 42, die zum Entleeren an ihrem Boden mit einem verschließbaren Abfluß 44 versehen ist. Auch aus dem nachgeschalteten Luftfilter herunterfallende Öltropfen sammeln sich in der Auffangwanne 42. Verunreinigungen in fester Form wie Staubpartikel, die sich in den luftdurchlässigen Strukturen 38 ansammeln, können durch Auswaschen oder Ausblasen entfernt werden. Es ist auch möglich, eine stark kontaminierte luftdurchlässige Struktur 38 einfach auszuwechseln.

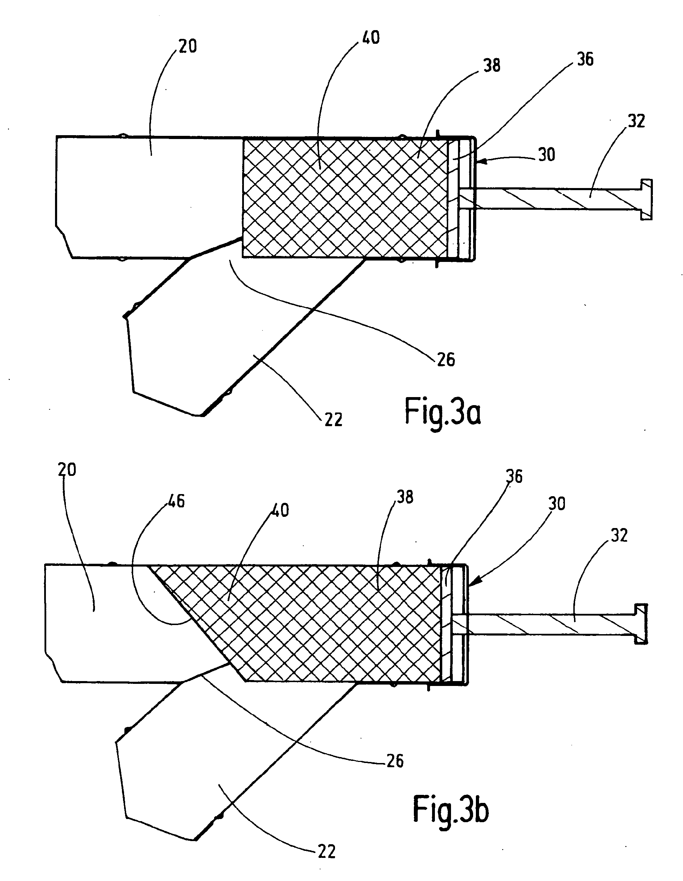

Bei der alternativen Ausführungsform gemäß Fig. 3b unterscheidet sich die luftdurchlässige Struktur 38 von der luftdurchlässigen Struktur des Ausführungsbeispiels gemäß Fig. 3a lediglich in ihrer Geometrie. So weist sie an der dem Handhebel 32 abgewandten und der Lufteinlassöffnung 18 bzw. der Luftströmung zugewandten Seite eine Oberflächenstruktur auf, die eine Stirnfläche 46 aufspannt, welche zur Querschnittsfläche des ersten Rohrs 20 geneigt ist. Zudem definiert die Längsachse des Handhebels 32 eine Drehachse, um die die luftdurchlässige Struktur 38 im ersten Rohr 20 drehbar ist. In der in Fig. 3b gezeigten Stellung ist die Luftauslassöffnung 26 teilweise frei. Die schräge Anordnung der Stirnfläche 46 bewirkt dabei eine Beschleunigung der Luft bei der Überleitung in das zweite Rohr 22. Es ist jedoch auch möglich, durch einfache Drehung des Handhebels 32 und der luftdurchlässigen Struktur 38 diese so anzuordnen, dass die Luftauslassöffnung 26 vollständig bedeckt wird. In diesem Fall wirkt die luftdurchlässige Struktur 38 wie ein Filter zwischen dem ersten Rohr 20 und dem zweiten Rohr 22. In dem in Fig. 3b gezeigten Ausführungsbeispiel ist die Stirnfläche 46 eine ebene Fläche. Sie kann jedoch auch unregelmäßig sein.

Im vorliegenden Ausführungsbeispiel wird die Abscheidevorrichtung 14 als Vorfilter vor einem Hauptfilter verwendet. Es versteht sich jedoch von selbst, dass die Abscheidevorrichtung 14 auch ohne nachgeschalteten Hauptfilter eingesetzt werden kann, insbesondere wenn der Luftstrom nur von größeren Verunreinigungen wie beispielsweise größeren Öltröpfchen oder größeren Staubpartikeln befreit werden soll.

Zusammenfassend ist folgendes festzuhalten:

Die Erfindung betrifft eine Vorrichtung zum Abscheiden von Verunreinigungen aus einem Luftstrom mit einem eine Lufteinlassöffnung 18 aufweisenden ersten Rohr 20, mit einem in eine Luftauslassöffnung 26 des ersten Rohrs 20 mündenden, sich in einer Richtung quer zu einer Längsrichtung des ersten Rohrs 20 erstreckenden zweiten Rohr 22 und mit einer im ersten Rohr 20 angeordneten, die lichte Weite des ersten Rohrs 20 durchspannenden Prallplatte 36 zur Umlenkung des Luftstroms in das zweite Rohr 22. Erfindungsgemäß ist vorgesehen, dass auf der Prallplatte 36 eine sich ein Stück weit in Längsrichtung des ersten Rohrs 20 erstreckende luftdurchlässige Struktur 38 mit miteinander kommunizierenden Hohlräumen 40 angeordnet ist.

## Patentansprüche

1. Vorrichtung zum Abscheiden von Verunreinigungen aus einem Luftstrom mit einem eine Lufteinlassöffnung (18) aufweisenden ersten Rohr (20), mit einem in eine Luftauslassöffnung (26) des ersten Rohrs (20) mündenden, sich in einer Richtung quer zu einer Längsrichtung des ersten Rohrs (20) erstreckenden zweiten Rohr (22) und mit einer im ersten Rohr (20) angeordneten, die lichte Weite des ersten Rohrs (20) durchspannenden Prallplatte (36) zur Umlenkung des Luftstroms in das zweite Rohr (22), welche in Längsrichtung des ersten Rohrs (20) verschiebbar ist, **dadurch gekennzeichnet, dass** auf der Prallplatte (36) eine sich ein Stück weit in Längsrichtung des ersten Rohrs (20) erstreckende luftdurchlässige Struktur (38) mit miteinander kommunizierenden Hohlräumen (40) angeordnet ist, die wenigstens über einen Teil ihrer Länge eine der Innenkontur des ersten Rohrs (20) entsprechende Außenkontur aufweist, und dass die Prallplatte (36) zwischen einer ersten Stellung, in der die luftdurchlässige Struktur (38) die Luftauslassöffnung (26) vollständig bedeckt, und einer zweiten Stellung, in der die luftdurchlässige Struktur (38) die Luftauslassöffnung (26) nur teilweise bedeckt, verschiebbar ist.

2. Vorrichtung nach Anspruch 1, **dadurch gekennzeichnet, dass** das erste Rohr (20) durch eine Abschlusskappe (30) an einem Ende luftdicht verschlossen ist und dass die Abschlusskappe (30) eine Führungseinrichtung für die Prallplatte (36) aufweist.

3. Vorrichtung nach Anspruch 1 oder 2, **dadurch gekennzeichnet, dass** die Prallplatte (36) zwischen einer ersten Endstellung, in der sie im Abstand zur Luftauslassöffnung (26) angeordnet ist, und einer zweiten Endstellung, in der sie über der Luftauslassöffnung (26) angeordnet ist, verschiebbar ist.

4. Vorrichtung nach einem der vorangehenden Ansprüche, **dadurch gekennzeichnet, dass** die Prallplatte (36) mittels eines mit ihr verbundenen, durch die Abschlusskappe (30) durchgeführten Handhebels (32) verschiebbar ist.

5. Vorrichtung nach einem der vorangehenden Ansprüche, **dadurch gekennzeichnet, dass** die luftdurchlässige Struktur (38) dem Luftstrom zugewandt eine zumindest abschnittsweise zur Querschnittsfläche des ersten Rohrs (20) geneigte Stirnfläche (46) aufspannt.

6. Vorrichtung nach Anspruch 5, **dadurch gekennzeichnet, dass** die luftdurchlässige Struktur (38) um eine sich in der Längsrichtung des ersten Rohrs (20) erstreckende Achse drehbar ist.

7. Vorrichtung nach einem der vorangehenden Ansprüche, **dadurch gekennzeichnet, dass** die Luftauslassöffnung (26) zwischen der Lufteinlassöffnung (18) und der Prallplatte (36) angeordnet ist.

8. Vorrichtung nach einem der vorangehenden Ansprüche, **dadurch gekennzeichnet, dass** die luftdurchlässige Struktur (38) ein Gewebe oder Gestrick aus Draht oder Fasermaterial aufweist.

9. Vorrichtung nach einem der vorangehenden Ansprüche, **dadurch gekennzeichnet, dass** die luftdurchlässige Struktur (38) ein geschäumtes, schwammartiges oder poröses Material, insbesondere ein gesintertes Material, Keramik und/oder Kunststoff aufweist und/oder zu den Hohlräumen (40) hin eine Oberfläche aus einem Material aufweist, das für die abzuscheidenden Verunreinigungen eine hohe Affinität aufweist.

10. Vorrichtung nach einem der vorangehenden Ansprüche, **dadurch gekennzeichnet, dass** sich die Hohlräume (40) in Richtung zur Prallplatte (36) kontinuierlich vergrößern oder kontinuierlich verkleinern.

11. Vorrichtung nach einem der vorangehenden Ansprüche, **dadurch gekennzeichnet, dass** das zweite Rohr (22) zum ersten Rohr (20) in einem spitzen Winkel angeordnet ist, so dass sich die Strömungsrichtung der Luft im zweiten Rohr (22) gegenüber der Strömungsrichtung im ersten Rohr (20) um mehr als 90° und weniger als 180° ändert.

12. Vorrichtung nach einem der vorangehenden Ansprüche, **dadurch gekennzeichnet, dass** das zweite Rohr (22) in ein drittes Rohr (24) mündet, dass die drei Rohre (20, 22, 24) in Form eines Z angeordnet sind und dass im dritten Rohr (24) nahe der Einmündung des zweiten Rohrs (22) eine der Prallplatte (36) entsprechende weitere Prallplatte (36) angeordnet ist.

## Claims

1. Device for separating impurities from an air flow, having a first pipe (20) which has an air inlet opening (18), having a second pipe (22) joining an air outlet opening (26) of the first pipe (20) and extending in a direction which is transverse to a longitudinal direction of the first pipe (20), and having a deflector plate (36) which is arranged in the first pipe (20) and stretches across the internal diameter of the first pipe (20) for deflecting the air flow into the second pipe (22) and which can be moved in the longitudinal direction of the first pipe (20), **characterised in that** an air-permeable structure (38), which to a certain extent extends in the longitudinal direction of the first pipe (20) and has holes (40) communicating with another, is arranged on the deflector plate (36) and has at least over a part of its length an outer contour corresponding to the inner contour of the first pipe (20), and **in that** the deflector plate (36) can be moved between a first position, in which the air-permeable structure (38) completely covers the air outlet opening (26), and a second position, in which the air-permeable structure (38) only partly covers the air outlet opening (26).

2. Device according to Claim 1, **characterised in that** the first pipe (20) is closed airtight at one end by an end cap (30), and **in that** the end cap (30) has a guiding device for the deflector plate (36).

3. Device according to Claim 1 or 2, **characterised in that** the deflector plate (36) can be moved between a first position, in which it is arranged at a distance from the air outlet opening (26), and a second position, in which it is arranged over the air outlet opening (26).

4. Device according to any one of the preceding claims, **characterised in that** the deflector plate (36) can be moved by means of a hand lever (32) which is connected to it and is guided through the end cap (30).

5. Device according to any one of the preceding claims, **characterised in that** the air-permeable structure (38) facing the air flow spans a front face (46) inclined at least in sections with respect to the cross-sectional area of the first pipe (20).

6. Device according to Claim 5, **characterised in that** the air-permeable structure (38) can be rotated about an axis extending in the longitudinal direction of the first pipe (20).

7. Device according to any one of the preceding claims, **characterised in that** the air outlet opening (26) is arranged between the air inlet opening (18) and the deflector plate (36).

8. Device according to any one of the preceding claims, **characterised in that** the air-permeable structure (38) has a mesh or netting made of wire or fibrous material.

9. Device according to any one of the preceding claims, **characterised in that** the air-permeable structure (38) has a foamed, spongy or porous material, in particular a sintered material, ceramic and/or plastic material and/or towards the holes (40) has a surface consisting of a material which has a high affinity for the impurities to be separated.

10. Device according to any one of the preceding claims, **characterised in that** the holes (40) steadily get bigger or steadily get smaller towards the deflector plate (36).

11. Device according to any one of the preceding claims, **characterised in that** the second pipe (22) is arranged at an acute angle with respect to the first pipe (20), so that the direction of flow of the air in the second pipe (22) changes by more than 90° and less than 180°with respect to the direction of flow in the first pipe (20).

12. Device according to any one of the preceding claims, **characterised in that** the second pipe (22) joins a third pipe (24), **in that** the three pipes (20, 22, 24) are arranged in the shape of a Z, and **in that** a further deflector plate (36) corresponding to the deflector plate (36) is arranged in the third pipe (24) near the junction with the second pipe (22).

## Revendications

1. Dispositif pour séparer des impuretés d'un flux d'air, avec un premier tuyau (20) présentant une ouverture d'entrée d'air (18), avec un deuxième tuyau (22) débouchant dans une ouverture de sortie d'air (26) du premier tuyau (20) et s'étendant dans une direction transversale à une direction longitudinale du premier tuyau (20), et avec une plaque déflectrice (36) disposée dans le premier tuyau (20), couvrant le diamètre intérieur du premier tuyau (20) et destinée à dévier le flux d'air dans le deuxième tuyau (22), plaque qui est mobile en translation dans la direction longitudinale du premier tuyau (20), **caractérisé en ce qu'**une structure perméable à l'air (38), s'étendant sur une petite distance dans la direction longitudinale du premier tuyau (20) et pourvue de cavités (40) communiquant entre elles, est disposée sur la plaque déflectrice (36), structure qui présente au moins sur une partie de sa longueur un contour extérieur correspondant au contour intérieur du premier tuyau (20), et **en ce que** la plaque déflectrice (36) est mobile en translation entre une première position, dans laquelle la structure perméable à l'air (38) recouvre totalement l'ouverture de sortie d'air (26), et une deuxième position dans laquelle la structure perméable à l'air (38) ne recouvre que partiellement l'ouverture de sortie d'air (26).

2. Dispositif selon la revendication 1, **caractérisé en ce que** le premier tuyau (20) est fermé en étanchéité à l'air à une extrémité par un bouchon d'obturation (30), et **en ce que** le bouchon d'obturation (30) présente un dispositif de guidage pour la plaque déflectrice (36).

3. Dispositif selon la revendication 1 ou 2, **caractérisé en ce que** la plaque déflectrice (36) est mobile en translation entre une première position, dans laquelle elle est disposée à distance de l'ouverture de sortie d'air (26), et une deuxième position dans laquelle elle est disposée au-dessus de l'ouverture de sortie d'air (26).

4. Dispositif selon l'une des revendications précédentes, **caractérisé en ce que** la plaque déflectrice (36) peut être déplacée en translation au moyen d'un levier à main (32) qui traverse le bouchon d'obturation (30) et lui est relié.

5. Dispositif selon l'une des revendications précédentes, **caractérisé en ce que** la structure perméable à l'air (38) forme, tournée vers le flux d'air, une face frontale (46) inclinée au moins pour partie par rapport à l'aire de section du premier tuyau (20).

6. Dispositif selon la revendication 5, **caractérisé en ce que** la structure perméable à l'air (38) est rotative autour d'un axe s'étendant dans la direction longitudinale du premier tuyau (20).

7. Dispositif selon l'une des revendications précédentes, **caractérisé en ce que** l'ouverture de sortie d'air (26) est disposée entre l'ouverture d'entrée d'air (18) et la plaque déflectrice (36).

8. Dispositif selon l'une des revendications précédentes, **caractérisé en ce que** la structure perméable à l'air (38) présente un tissu ou tricot de fil métallique ou de matière fibreuse.

9. Dispositif selon l'une des revendications précédentes, **caractérisé en ce que** la structure perméable à l'air (38) présente un matériau moussé, spongieux ou poreux, en particulier un matériau fritté, un matériau céramique et/ou une matière plastique, et/ou présente en direction des cavités (40) une surface constituée d'un matériau qui présente une affinité élevée vis-à-vis des impuretés à séparer.

10. Dispositif selon l'une des revendications précédentes, **caractérisé en ce que** les cavités (40) augmentent ou diminuent de taille en continu en direction de la plaque déflectrice (36).

11. Dispositif selon l'une des revendications précédentes, **caractérisé en ce que** le deuxième tuyau (22) est disposé sous un angle aigu par rapport au premier tuyau (20), de sorte que la direction d'écoulement de l'air dans le deuxième tuyau (22) se modifie de plus de 90° et moins de 180° par rapport à la direction d'écoulement dans le premier tuyau (20).

12. Dispositif selon l'une des revendications précédentes, **caractérisé en ce que** le deuxième tuyau (22) débouche dans un troisième tuyau (24), **en ce que** les trois tuyaux (20, 22, 24) sont disposés en forme de Z, et **en ce qu'**une autre plaque déflectrice (36), correspondant à la plaque déflectrice (36), est disposée dans le troisième tuyau (24) à proximité de l'embouchure du deuxième tuyau (22).
